(19)

Europäisches
Patentamt

European
Patent Office

Office européen
des brevets

(11)  **EP 2 371 893 A1**

(12)  **EUROPEAN PATENT APPLICATION**
published in accordance with Art. 153(4) EPC

(43) Date of publication:
**05.10.2011 Bulletin 2011/40**

(21) Application number: **09835122.4**

(22) Date of filing: **25.12.2009**

(51) Int Cl.:
*C08L 1/02* (2006.01)      *B32B 5/02* (2006.01)
*C08J 7/04* (2006.01)      *C08K 3/10* (2006.01)
*C08K 3/28* (2006.01)      *C08K 5/09* (2006.01)
*C08K 5/17* (2006.01)      *C09D 5/00* (2006.01)
*C09D 101/00* (2006.01)    *D21H 11/16* (2006.01)

(86) International application number:
**PCT/JP2009/071890**

(87) International publication number:
**WO 2010/074341 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.12.2008 JP 2008334372**
**06.02.2009 JP 2009025860**
**24.12.2009 JP 2009291856**
**24.12.2009 JP 2009291857**

(71) Applicant: **Kao Corporation**
**Chuo-Ku**
**Tokyo 103-8210 (JP)**

(72) Inventors:
• **MUKAI, Kenta**
  **Haga-gun**
  **Tochigi 321-3497 (JP)**
• **KUMAMOTO, Yoshiaki**
  **Haga-gun**
  **Tochigi 321-3497 (JP)**

(74) Representative: **HOFFMANN EITLE**
**Patent- und Rechtsanwälte**
**Arabellastraße 4**
**81925 München (DE)**

(54)  **CELLULOSE FIBER SUSPENSION AND MANUFACTURING METHOD THEREFOR, AND FILM-LIKE FORMED BODY AND MANUFACTURING METHOD THEREFOR**

(57)    The present invention provides the suspension of cellulose fibers suitable for producing an oxygen gas barrier film. The present invention provides a suspension of cellulose fibers containing cellulose fibers, a polyvalent metal and a volatile base, wherein the cellulose fibers have an average fiber diameter of not more than 200 nm and the content of carboxyl groups of cellulose composing the cellulose fibers of 0.1 to 2 mmol/g. The suspension is a good material for a film having oxygen gas barrier properties. The present invention provides a film containing cellulose fibers and an inorganic or organic metal salt, wherein the cellulose fibers have an average fiber diameter of not more than 200 nm and the content of carboxyl groups of cellulose composing the cellulose fibers of 0.1 to 2 mmol/g.

EP 2 371 893 A1

**Description**

Field of the invention

The present invention relates to a suspension of cellulose fibers suitable for producing an oxygen barrier film, a method for producing the suspension, a molded article using the suspension, and a method for producing the molded article. The present invention further relates to a film having good barrier properties against oxygen, water vapor, and the like, and a method for producing the film.

Background of the invention

Current gas barrier material, such as for shielding oxygen and water vapor, are produced mainly from fossil resources. These are thus non-biodegradable, and have to be incinerated after use. Therefore, materials for oxygen barrier that are biodegradable and produced from reproducible biomass are studied.

JP-A 2002-348522 relates to a coating agent containing microcrystalline cellulose and a layered material produced by applying the coating agent on a substrate. The patent describes that a microcrystalline cellulose powder as a raw material preferably has an average particle diameter of 100 μm or less, and that cellulose powders having average particle diameters of 3 μm and 100 μm were used in Examples.

JP-A 2008-1728 relates to fine cellulose fibers. The patent describes an ability of the fiber to be used as a coating material.

JP-A 2005-126539 discloses a method for producing a gas barrier film by forming a film material mainly composed of polyacrylic acid and a polyalcohol polymer, heat-treating the film material, and immersing the film material in a medium containing a metal to ionically cross-link (claim 15, Example 1, etc.).

JP-A 2005-126539 and WO-A2007/125741 describe films having oxygen gas barrier and moisture-proof properties, that contain a polycarboxylic acid polymer such as polyacrylic acid and a polyvalent metal salt such as zinc oxide. These films are prepared by forming a solution or dispersion of a mixture of the polycarboxylic acid polymer and the polyvalent metal salt into a film.

JP-A 2001-334600 relates to a gas barrier material produced from a water-soluble polysaccharide containing the residual group of uronic acid that is a biodegradable oxygen barrier material.

JP-A 10-237180 discloses a method for producing a film by coating a solution containing a polycarboxylic acid polymer (polyacrylic acid in Example) , a polyvalent metal compound, and a volatile base on a substrate and heat-treating (claim 8, Example 1, etc.).

Summary of the invention

The present invention provides the following (A1), (A4) , (A5), (A6), (A8) , and (A9).

(A1) A suspension of cellulose fibers containing cellulose fibers, a polyvalent metal and a volatile base, wherein the cellulose fibers have an average fiber diameter of not more than 200 nm and the content of carboxyl groups of cellulose composing the cellulose fibers of 0.1 to 2 mmol/g.
(A4) A film formed from the suspension of cellulose fibers according to (A1).
(A5) A molded composite containing a substrate and a layer formed from the suspension of cellulose fibers according to (A1) on the substrate.
(A6) A method for producing a suspension of cellulose fibers, including steps of mixing cellulose fibers with an aqueous acid solution, wherein the cellulose fibers have an average fiber diameter of not more than 200 nm and the content of carboxyl groups of cellulose composing the cellulose fibers of 0.1 to 2 mmol/g;

> filtering the mixture; and
> mixing the filtered matter, obtained in the preceding step, with an aqueous solution containing a polyvalent metal and a volatile base.

(A8) A method for producing the film according to (A4), including steps of applying the suspension of cellulose fibers to a hard surface for forming; drying the suspension of cellulose fibers to obtain a film; and heating it at 30 to 300°C for 1 to 300 minutes.
(A9) A method for producing the molded composite according to (A5), including steps of applying the suspension of cellulose fibers to the surface of the substrate; drying the suspension of cellulose fibers to obtain the molded composite; and heating it at 30 to 300°C for 1 to 300 minutes.

The present invention provides the following (B1), (B5), (B6) and (B7).

(B1) A film containing cellulose fibers and an inorganic metal salt or an organic metal salt, wherein the cellulose fibers have an average fiber diameter of not more than 200nm and the content of carboxyl groups of cellulose composing the cellulose fibers of 0.1 to 2 mmol/g.
(B5) A molded composite containing a molded substrate and a layer of the film according to (B1) on the surface of the molded substrate.
(B6) A method for producing the film according to (B1), including steps of:

applying the suspension of cellulose fibers on a base plate to form a film material;
attaching a solution of an inorganic metal salt to the film material; and
drying it.

(B7) A method for producing the molded composite according to (B5), including steps of:

applying the suspension of cellulose fibers on the substrate to form a film material;
attaching a solution of an inorganic metal salt to the film material; and
drying it.

Detailed description of the invention

In JP-A 2002-348522, there is no description about a pulverizing treatment of fibers. The patent has room for improvement in compactness, film strength, and adhesion to the substrate of the coating agent layer applied.
In JP-A 2008-1728, there is no description about an application with specific effects of fine cellulose fibers as a coating material.
Bio MACROMOLECULES Volume 7, Number 6, 2006, June, published by the American Chemical Society, does not at all describe gas barrier properties such as oxygen barrier.
Materials for gas barrier of JP-A 2005-126539 and WO-A2007/125741 are mainly composed of fossil resources. These are thus non-biodegradable, and have to be incinerated after use. Therefore, materials for oxygen barrier that are biodegradable and produced from reproducible biomass are studied.
The gas barrier material of JP-A 2001-334600 may decrease its gas barrier properties in high humid atmosphere.
The present invention provides the suspension of cellulose fibers suitable for producing an oxygen barrier film and the method for producing the suspension.
The present invention also provides the film and the molded composite that have good oxygen barrier properties and are produced using the suspension of cellulose fibers.
The present invention also provides the film containing specific cellulose fibers and an inorganic metal salt and having high barrier properties against oxygen and water vapor and the like, and the method for producing the film.
The suspension of cellulose fibers of the present invention is a suitable material for producing a film having gas barrier properties against such as oxygen gas. A film produced from the suspension has high oxygen gas barrier properties.
The film of the present invention has high permeation barrier properties against oxygen gas, water vapor and the like.
The present invention provides the following preferred embodiments (A2), (A3), (A7), (B2), (B3), (B4), (B8), and (B9).

(A2) The suspension of cellulose fibers according to (A1), wherein an amount of the volatile base is 1 to 500 equivalents to the content of carboxyl groups in the cellulose fibers.
(A3) The suspension of cellulose fibers according to (A1), wherein the amount of the polyvalent metal is 0.1 to 1.5 equivalents to the content of carboxyl groups in the cellulose fibers.
(A7) The method for producing a suspension of cellulose fibers according to (A6), wherein the structure of the carboxyl group in the cellulose fibers is:

$COO-Na^+$, before the step of mixing cellulose fibers with the aqueous acid solution;
$COOH$, in the step of mixing with the aqueous acid solution; and
$COO-B^+$ ($B^+$ represents a conjugated acid of the volatile base), in the step of mixing with the aqueous solution containing the polyvalent metal and the volatile base.

(B2) The film according to (B1), wherein the cellulose fibers having an average fiber diameter of not more than 200 nm have an average aspect ratio of 10 to 1,000.

(B3) The film according to (B1) or (B2), wherein the inorganic metal salt is selected from inorganic sodium salts, inorganic magnesium salts and inorganic aluminum salts.

(B4) The film according to (B1) or (B2), wherein the organic metal salt is selected from carboxylates of sodium or magnesium.

(B8) The method for producing the film according to (B6), wherein the step of attaching a solution of an inorganic metal salt to the film material is performed without drying the film material.

(B9) The method for producing the film according to (B7), wherein the step of attaching a solution of an inorganic metal salt to the film material is performed without drying the film material.

Below, inventions (A1), (A4), (A5), (A6), (A8), and (A9) will be described in detail.

<Suspension of cellulose fibers and method for producing the same>

The suspension of cellulose fibers of the present invention can be produced by a method of production described below. The method of production is suitable for producing the suspension. The suspension of cellulose fibers of the present invention thus can be produced by a modified method of production in which part of the steps is changed.

[Preparation of specific cellulose fibers]

The cellulose fibers used in the present invention have an average fiber diameter of not more than 200 nm, preferably 1 to 200 nm, more preferably 1 to 100 nm, and even more preferably 1 to 50 nm. The average fiber diameter can be measured by the method described in Examples.

From the viewpoint of achieving high gas barrier properties, the content of carboxyl groups in the cellulose composing the cellulose fibers used in the present invention is 0.1 to 2 mmol/g, preferably 0.4 to 2 mmol/g, more preferably 0.6 to 1.8 mmol/g, and even more preferably 0.6 to 1.6 mmol/g. The content of carboxyl groups can be measured by the method described in Examples. Cellulose fibers having the content of carboxyl groups of less than 0.1 mmol/g cannot be pulverized into fine cellulose fibers having an average fiber diameter of not more than 200 nm even by the pulverizing treatment of fibers described below.

In the cellulose fibers used in the present invention, the content of carboxyl groups in the cellulose composing the cellulose fibers is within the range described above. Depending on conditions such as oxidizing treatment in a practical production process, cellulose fibers being out of the above specified ranges of the content of carboxyl groups may be contained in the produced cellulose fibers as impurities after the oxidizing treatment.

The cellulose fibers used in the present invention have an average aspect ratio of 10 to 1,000, more preferably of 10 to 500, and even more preferably of 100 to 350. The average aspect ratio can be measured by the method described in Examples.

The cellulose fibers used in the present invention can be produced, for example, by the following method. First, to natural fibers as a raw material is added about 10 to 1000 times amount by mass of water (based on absolute dry mass), and the mixture is processed with a mixer or the like to provide a slurry.

Examples of the natural fiber that can be used as raw material include wood pulps, nonwood pulps, cotton, and bacterial celluloses.

Next, the natural fibers are subjected to an oxidizing treatment with 2,2,6,6-tetramethyl-1-piperidine-N-oxyl (TEMPO) as a catalyst. Other catalysts can also be used, including derivatives of TEMPO such as 4-acetamide-TEMPO, 4-carboxy-TEMPO, and 4-phosphonoxy-TEMPO.

A used amount of TEMPO is within the range from 0.1 to 10% by mass to the natural fibers used as the raw material (based on absolute dry mass).

In the oxidizing treatment, a cooxidant is used together with TEMPO, including oxidants such as sodium hypochlorite and bromides such as sodium bromide.

Examples of the oxidant that can be used include hypohalous acids and salts thereof, halous acids and salts thereof, perhalic acids and salts thereof, hydrogen peroxide, and organic peracids. Preferred are alkaline metal hypohalites such as sodium hypochlorite and sodium hypobromite. A used amount of the oxidant is within the range from about 1 to 100% by mass to the natural fibers used as the raw material (based on absolute dry mass).

For the cooxidant, alkaline metal bromides such as sodium bromide are preferably used. A used amount of the cooxidant used is within the range from about 1 to 30% by mass to the natural fibers used as the raw material (based on absolute dry mass).

A pH of the slurry is preferably kept within the range from 9 to 12 for effectively progressing oxidation.

A temperature of the oxidizing treatment (temperature of the slurry) is arbitrarily set in the range from 1 to 50°C. The oxidizing treatment can progress at room temperature and does not require specific temperature control. A time of the oxidizing treatment is desirably 1 to 240 minutes.

After the oxidizing treatment, the used catalyst and the like are removed by washing with water or the like. In this stage, the treated fibers are not pulverized, and can be purified by repetitive washing and filtering. An oxidized cellulose, which is optionally dried, can be prepared in the form of fiber or powder.

Then, the oxidized cellulose is dispersed in a medium such as water, and pulverized to a desired fiber width and length with a defibrator, a beater, a low-pressure homogenizer, a high-pressure homogenizer, a grinder, a cutter mill, a ball mill, a jet mill, a single screw extruder, a twin screw extruder, an ultrasonic agitator, or a home juicer-mixer. In this step, a solid content of the dispersion is preferably 50% or less by mass. The dispersion having higher solid content than 50% by mass requires high energy for dispersing, which is unfavorable.

Such a pulverizing treatment produces cellulose fibers having an average fiber diameter of not more than 200 nm, and further having an average aspect ratio of 10 to 1,000, more preferably 1.0 to 500, and even more preferably 100 to 350.

Then, the treated cellulose fibers can be obtained in the form of a suspension (visually colorless and transparent or opaque liquid) having an adjusted solid content or in the form of a dried powder (powdery aggregates of cellulose fibers, not cellulose particles), according to need. When the suspension is produced, it may be produced using only water or water mixed with other organic solvent (e.g. , an alcohol such as ethanol), a surfactant, an acid, a base, and the like.

In the oxidizing treatment and pulverizing treatment, the hydroxy group at C6-position of a cellulose-constituting unit is selectively oxidized to a carboxyl group via an aldehyde group to produce a pulverized high crystalline cellulose fibers having an average fiber diameter of not more than 200 nm composed of a cellulose having the content of carboxyl groups of 0.1 to 2 mmol/g.

The high crystalline cellulose fibers have Type I crystal structure of cellulose. This means that the cellulose fibers are produced by surface oxidation and pulverization of a natural solid cellulose having Type I crystal structure. In other words, natural cellulose fibers have a higher ordered solid structure through formation of bundles of fine fibers, called microfibrils, produced in a biosynthesis process of the natural cellulose fibers. In the present invention, a strong cohesion force (hydrogen bonding between surfaces) among microfibrils is reduced by introducing aldehyde or carboxyl groups and then fine cellulose fibers are obtained by pulverization.

The content of carboxyl groups can be increased or decreased within a given range by adjusting oxidizing treatment conditions, changing the polarity of the cellulose fiber. An average fiber diameter, an average fiber length, an average aspect ratio and the like of the cellulose fibers can be controlled by thus controlling electrostatic repulsion of carboxyl groups and pulverizing conditions.

The cellulose fibers produced by the oxidizing treatment and pulverizing treatments can satisfy the following requirements (I), (II), and (III):

(I): the cellulose fibers have good properties such that a suspension of the cellulose fibers, diluted to 0.1% by mass of th esolid content, contains cellulose fibers passing through a 16 $\mu$m-mesh glass filter in an amount of 5% or more by mass of the whole cellulose fibers in the suspension before passing;

(II): a suspension of the cellulose fibers diluted to 1% by mass of solid content contains no cellulose particles having a particle diameter of 1 $\mu$m or more; and

(III): a suspension of the cellulose fibers diluted to 1% by mass of solid content has a light transmittance of 0.5% or more.

Requirement (I): The suspension of the cellulose fibers diluted to 0.1% by mass of a solid content produced by the oxidizing treatment and pulverizing treatments contains cellulose fibers passing through a 16 $\mu$m-mesh glass filter in an amount of 5% or more by mass of the whole cellulose fibers in the suspension before passing (a percentage by mass of fine cellulose fibers passing through the glass filter is referred to as a content of fine cellulose fibers). From the viewpoint of gas barrier properties, the content of fine cellulose fibers is preferably 30% or more, and more preferably 90% or more.

Requirement (II) : The suspension of the cellulose fibers, diluted to 1% by mass of the solid content produced by the oxidizing treatment and pulverizing treatments, preferably contains pulverized fibers of the starting natural fibers. It is preferable that it does not contain cellulose particles having particle diameters of 1 $\mu$m or more. As used herein, the "particle" refers to that having a nearly spherical shape and a projection geometry (projected geometry) of the shape on a plane in which a rectangle encompassing the geometry has a ratio of a long axis to a short axis (long axis/short axis) of 3 at the maximum. The particle diameter of the particle is defined by an arithmetic average of the long axis and the short axis. The presence or absence of the particle is determined by observation with an optical microscope described below.

Requirement (III) : The suspension of the cellulose fibers of 1% by mass of solid content produced by the oxidizing treatment and pulverizing treatments preferably has a light transmittance of 0.5% or more, and from the viewpoint of gas barrier properties, more preferably 40% or more, and even more preferably 60% or more.

In preparing a suspension of the cellulose fibers of the present invention, the sold content of the suspension can be adjusted to be suitable for forming as desired. For example, the solid content may be in the range from 0.05 to 30% by mass.

[Step of mixing cellulose fibers with an aqueous acid solution]

The specific cellulose fibers have -COONa in a cellulose molecule derived from the step of production. In this step of mixing, the cellulose fibers and an aqueous solution of an acid such as hydrochloric acid are mixed and stirred to occur substitution of Cell-COO⁻Na⁺→Cell-COOH. At the end of the substitution, cellulose fibers turn from a dispersion state to an aggregation state. The present step is preferably performed in production of the suspension of cellulose fibers of the present invention. The present step and the next step thereto, however, may be skipped and the step of mixing cellulose fibers with an aqueous solution containing a polyvalent metal and a volatile base may start. Progress of the substitution of Cell-COO⁻Na⁺→Cell-COOH can be confirmed qualitatively and quantitatively by elemental analysis such as infrared absorption spectroscopy and fluorescent X-ray spectroscopy.

When the aqueous acid solution is 1M aqueous hydrochloric acid, the amount thereof is such that hydrochloric acid may be about 2 equivalents chemically to carboxyl group in cellulose.

[Step of filtering a mixture (aggregates) obtained at the previous step]

In the step, a mixture (aggregate) obtained at the previous step is filtrated and washed with water.

A used amount of water for washing is about 10 to 10,000 times by mass to the resultant solid (wet solid matter) by filtration.

[Step of mixing the resultant solid from the previous step with an aqueous solution containing a polyvalent metal and a volatile base]

The next step is to mix and stir the resultant solid from the previous step with an aqueous solution containing a polyvalent metal and a volatile base.

Examples of the polyvalent metal include oxides, hydroxides, and carbonates of zinc, cobalt, nickel, and copper.

Examples of the volatile base include ammonia, methylamine, dimethylamine, ethylamine, diethylamine, and triethylamine. The volatile base forms an ammonium complex with the polyvalent metal (e.g., zinc ammonium and copper ammonium) in the suspension.

From the viewpoint of barrier properties of a film therewith, an amount of the polyvalent metal used is preferably 0.05 to 1. 5 equivalents, more preferably 0.3 to 1.0 equivalents, and even more preferably 0.4 to 0.6 equivalents to an amount of carboxyl groups in cellulose fibers. At 1.5 equivalents or less of the polyvalent metal, the cellulose fiber and an unreacted polyvalent metal are suppressed from remaining in the film, resulting in a compact film structure. In a film prepared 0.1 equivalents or more, a cross-linking structure of cellulose fibers with the polyvalent metal is formed to a sufficient degree, resulting in a film having good barrier properties.

An amount of the volatile base is 1 to 500 equivalents, preferably 2 to 100 equivalents, and more preferably 5 to 50 equivalents to an amount of carboxyl groups in cellulose fibers. When the amount of the volatile base is 1 equivalent or less, a suspension in which cellulose fibers are uniformly dispersed is hardlyprepared. When 500 equivalents or less, the resulting suspension has good processability to form a film in the subsequent process of producing a film and a molded composite.

In this step, a complex of the polyvalent metal with the volatile base is formed as represented by the reaction formula (when zinc oxide and ammonia are used).

The cellulose fibers react with the volatile base added to occur substitution of Cell-COOH→Cell-COO⁻B⁺ (wherein, B⁺ represents a conjugate acid of the volatile base, which is $NH_4^+$ in the reaction formula). The aggregate accordingly disperses uniformly again to obtain a suspension of cellulose fibers. Cellulose fibers will form a linkage (cross-linking) of - COO-M-OOC- (wherein, M represents a polyvalent metal, which is Zn in the reaction formula) after the volatile base and water are evaporated from the suspension of cellulose fibers. In the suspension, however, the linkage (cross-linking) is not yet formed, because the suspension contains the volatile base and water.

$$ZnO + 4NH_3 + H_2O \rightarrow [Zn(NH_3)_4]^{2+} (OH^-)_2$$

Progress of the substitution of Cell-COOH→Cell-COO⁻B⁺ can be confirmed qualitatively and quantitatively by elemental analysis such as infrared absorption spectroscopy and fluorescent X-ray spectroscopy.

The suspension of cellulose fibers of the present invention produced by the method described above contains very fine cellulose fibers, and thus is visually transparent when it contains 50% or less by mass of cellulose fibers.

In the present invention, all the polyvalent metal, mixed with the volatile base, may not form a complex with the volatile vase and part of the polyvalent metal may remain undissolved in the suspension of cellulose fibers.

The suspension of cellulose fibers prepared by this step contains the polyvalent metal as an alkaline complex with the volatile base, and thus can keep the state of uniform dispersion of cellulose fibers. The suspension can therefore be used as a material for producing more uniform film. For example, when a polyvalent metal salt (e.g., $ZnCl_2$) is added to a cellulose suspension without the volatile base, aggregation of cellulose fibers occurs and the resulting suspension is not good material for producing a uniform film.

The suspension of cellulose fibers of the present invention can be used as a coating material. In this case, the suspension can comprise water and an organic solvent according to need.

The suspension of cellulose fibers of the present invention has gas barrier properties such as oxygen barrier and water vapor barrier properties in the form of film. The suspension thus can be used as a film- forming material by itself to produce a film and the like, and also can be applied to the surface of an planar molded article or a tri-dimensional molded article by known methods such as coating, spray, and immersion to modify the surface (i.e., imparting gas barrier properties and moisture resistant properties) without damaging the appearance of the article.

The suspension of cellulose fibers of the present invention can further contain additives such as a UV absorber and a colorant according to an intended use.

Next, embodiments of producing a film and a molded composite using the suspension of cellulose fibers of the present invention are described.

<Film>

The film of the present invention can be formed from the suspension of cellulose fibers by the method described below.

In a first step, the suspension of cellulose fibers is applied to a base plate to form a film material.

Specifically, the suspension of cellulose fibers having a viscosity of about 10 to 5000 mPa·s is cast on (or applied to, sprayed to, or used as immersion) the hard surface of the base plate such as of glass and metal to form the film. In this method, by controlling the content of carboxyl groups and an aspect ratio of cellulose fibers in the suspension of cellulose fibers and a thickness of the gas barrier molded article, the film can have intended properties according to design (high barrier properties, transparency, etc.).

The film material is then dried at a room temperature (20 to 25°C), and according to need, further subjected to a heat treatment for 1 to 300 minutes, more preferably 5 to 60 minutes at 30 to 300°C, more preferably 60 to 200°C, and even more preferably 100 to 160°C to obtain a film. In the previous step and this step, the volatile base and water (in some cases an organic solvent) are removed from the suspension of cellulose fibers by evaporation, and the reaction as represented by the reaction formula occurs to form a linkage (cross-linking) of Cell-COO-M-OOC-Cell (wherein, Cell represents cellulose, and M represents a polyvalent metal). Since the cross-linking reaction is facilitated by heat treatment, the heat treatment in production of film will accelerate the cross-linking reaction to form a compact film structure.

The heat-treated molded article is then cooled and dried according to need, peeled off from the base plate such as of glass to obtain a film. The film thus produced has increased gas barrier properties due to formation of a cross-linking structure of cellulose fibers.

The film of the present invention has moisture resistant properties (in strength and barrier properties) due to formation of the cross-linking structure, and can be used for, in addition to gas barrier materials, separation membranes for water purification, separation membranes for alcohol, polarizing films, polarizer protection films, flexible transparent substrates for display, separators for fuel cell, condensation-preventing sheets, antireflection sheets, UV shield sheets, and infrared shield sheets.

<Molded composite>

The molded composite of the present invention contains a substrate and a layer of cellulose fibers, and can be produced by the method described below.

In a first step, the suspension of cellulose fibers is applied (by coating, spraying, immersing, casting, etc.) to the surface of the substrate to obtain a primary molded composite having a layer of cellulose fibers formed on the substrate (at one or each side of the substrate).

It is also possible to layer and adhere a film previously prepared as above to the substrate. For adhering, known methods can be used, including adhering with an adhesive and pasting by heat fusion.

The primary molded composite is then dried at a room temperature (20 to 25°C), and according to need, further subjected to a heat treatment for 1 to 300 minutes, more preferably 5 to 60 minutes at 30 to 300°C, more preferably 60 to 200°C, and even more preferably 100 to 160°C to obtain a molded composite containing the substrate and the layer of cellulose fibers. During the previous step and this step, the volatile base and water (in some cases, and an organic solvent) are removed from the suspension of cellulose fibers by evaporation, and the reaction as represented by the reaction formula occur to form the linkage (cross-linking) of Cell-COO-M-OOC-Cell (wherein, Cell represents cellulose, and M represents a polyvalent metal).

The heat-treated molded article is then cooled and dried according to need to obtain a molded composite. The molded composite thus produced has increased gas barrier properties due to formation of a cross-linking structure of cellulose fibers.

The molded composite of the present invention has moisture resistant properties (in strength and barrier properties) due to formation of the cross-linking structure, and can be used for, in addition to gas barrier materials, separation membranes for water purification, separation membranes for alcohol, polarizing films, polarizer protection films, flexible transparent substrates for display, separators for fuel cell, condensation-preventing sheets, antireflection sheets, UV shield sheets, and infrared shield sheets.

A thickness of the layer of cellulose fibers can be appropriately set according to an intended use. When used for gas barrier molded composite, the thickness is preferably 20 to 900 nm, more preferably 50 to 700 nm, and even more preferably 100 to 500 nm.

For the molded substrate, those can be used, including thin layer articles having desired shape and size such as film, sheet, woven fabric, and nonwoven fabric, and tridimensional containers of various shapes and sizes such as boxes and bottles. These molded substrates can be of paper, paperboard, plastic, metal (those having many pores or in the form of woven metal mainly used for reinforcing), or composite material thereof. Among these materials, preferably used are plant-derived materials such as paper and paperboard, biodegradable materials such as biodegradable plastics, and biomass-derived materials. The molded substrate may have a multi-layer structure of a single material or different materials (e.g., composed of different adhesives and wetting-increasing agents).

The substrate can be composed of plastic appropriately selected according to an intended use. Examples of the plastic include polyolefins such as polyethylene and polypropylene, polyamides such as nylons 6, 66, 6/10, and 6/12, polyesters such as poly(ethylene terephthalate) (PET), poly(butylene terephthalate), aliphatic polyesters, polylactic acid (PLA), polycaprolactone, and polybutylene succinate, cellophanes such as cellulose, and triacetic acid cellulose (TAC). These plastics may be used alone or in combination.

A thickness of the molded substrate is not specifically limited, and appropriately selected so as to impart a strength suitable for an intended use. For example, the thickness is within the range from 1 to 1000 $\mu$m.

Below, (B1), (B5), (B6), and (B7) of the present invention will be described in detail.

<Film>

The film of the present invention contains specified cellulose fibers and an inorganic or organic metal salt, and is a gas barrier film. The molded composite of the present invention contain a molded substrate and a layer of the film containing specific cellulose fibers and an inorganic metal salt on the surface of the molded substrate.

Production of the specified cellulose fibers used as a raw material is as described above. In production, for natural fibers as a starting material, hydrolyzed and mercerized fibers can be used.

It is considered that, in film containing the cellulose fibers produced by the oxidizing treatment and pulverizing treatment, fine cellulose fibers may strongly interact with each other to form hydrogen bond and/or crosslinking, thereby is prevented from gas dissolution and gas diffusion, and the film may thus exhibit gas barrier properties such as high oxygen barrier properties. In addition, since a size and a distribution of pores among cellulose fibers in a formed article can be changed (in other words, effects of molecular sieving can be varied) according to a width and a length of cellulose fibers, the film can be expected to have molecular selective barrier properties.

The suspension of the cellulose fibers may contain other known additives. Examples of the additive include fillers, colorants such as a pigment, UV absorbers, antistats, clay minerals (e.g., montmorillonite), colloidal silica, alumina sol, and titanium oxide.

<Step of forming a film material of cellulose suspension on a base plate or a substrate>

In this step, a suspension is prepared from the cellulose fibers prepared by the above method or the suspension containing the cellulose fibers prepared by the method of production is used to form an intended film material.

This step may be performed, for example, by either step of:

(i) forming a film material of the suspension containing cellulose fibers on the hard surface of a base plate such as of glass and metal; or
(ii) forming a film material of the suspension containing cellulose fibers on a substrate such as a film and a sheet.

After this step, the film material containing the cellulose suspension may be dried to obtain a film containing cellulose fibers.

[Step (i) of forming]

A suspension of cellulose fibers having a viscosity of around 10 to 5000 mPa·s is cast on the hard surface of a base plate such as of glass and metal to obtain a film material. In this step, a solution of an inorganic or organic metal salt, as described below, is attached to the film material and dried the obtained film is peeled off from the base plate to obtain the film containing specific cellulose fibers and the inorganic or organic metal salt without a substrate. Alternatively, the obtained film containing the cellulose fibers formed on the base plate is peeled off from the base plate and a solution of an inorganic or organic metal salt described below is attached thereto and dried to obtain the film containing the specified cellulose fibers and the inorganic or organic metal salt.

[Step (ii) of forming]

A suspension of cellulose fibers is attached on a substrate on one side or both sides of the molded substrate by known methods such as applying, spraying, and immersion, preferably by applying or spraying to form a film material. In this step, a solution of an inorganic or organic metal salt described below is attached to the film material and dried to obtain a molded composite containing the molded substrate and a layer of the film containing the specified cellulose fibers and the inorganic or organic metal salt on the surface of the substrate.

For the molded substrate, those can be used, including thin layer articles having desired shape and size such as film, sheet, woven fabric, and nonwoven fabric, and tridimensional containers of various shapes and sizes such as boxes and bottles. These molded substrates can be of paper, paperboard, plastic, metal (those having many pores or in the form of woven metal mainly used for reinforcing), or composite material thereof. Among these materials, preferably used are plant-derived materials such as paper and paperboard, biodegradable materials such as biodegradable plastics, and biomass-derived materials. The molded substrate may have a multi-layer structure of combination of the same material or different materials (e.g., composed of different adhesives and wetting-increasing agents).

The substrate can be composed of plastic appropriately selected according to an intended use. Examples of the plastic include polyolefins such as polyethylene and polypropylene, polyamides such as nylons 6, 66, 6/10, and 6/12, polyesters such as poly(ethylene terephthalate) (PET), poly(butylene terephthalate), aliphatic polyesters, polylactic acid (PLA), polycaprolactone, and polybutylene succinate, cellophanes such as cellulose, and triacetic acid cellulose (TAC). These plastics may be used alone or in combination.

A thickness of the molded substrate is not specifically limited, and appropriately selected so as to impart a strength suitable for an intended use. For example, the thickness is within the range from 1 to 1000 $\mu$m.

<Step of applying a solution of an inorganic metal salt to a film material of the suspension of cellulose fibers or a dried film material (film of cellulose fibers)>

For applying a solution of an inorganic or organic metal salt to a film material of the suspension of cellulose fibers or a dried film material, these methods can be used (external addition):

(i) spraying the solution of an inorganic or organic metal salt on the surface of the film material,
(ii) coating the solution of an inorganic or organic metal salt on the surface of the film material,
(iii) casting the solution of an inorganic or organic metal salt on the surface of the film material,
(iv) simultaneously coating the suspension of cellulose fibers and the solution of an inorganic or organic metal salt in a multilayer manner, and
(v) immersing the film material together with the base plate or the substrate in whole in the solution of an inorganic or organic metal salt.

In the method (i), for example, a film material having a surface area of 500 cm$^2$ can be sprayed with a solution of 1 to 30% by mass inorganic or organic metal salt in the whole amount of 0.1 to 10 ml.

In the case of applying the solution of an inorganic or organic metal salt on the film material in a non-dried state (wet and fluent), the metal ion and the acid ion easily penetrate into the film material. In the case of the film material in a dry state, the metal ion and the acid ion tend to stay on or near the surface of the film material. In this step, the solution of an inorganic or organic metal salt is applied to the film material and may be allowed to stand for some time at room temperature, if necessary under pressurized atmosphere, to allow an inorganic or organic metal salt to penetrate into the film material.

The solution of an inorganic or organic metal salt is preferably aqueous. It may contain a water-compatible solvent such as ethanol and isopropyl alcohol. The solution of an inorganic or organic metal salt may contain two or more inorganic or organic metal salts. The applied amount of an inorganic or organic metal salt can be controlled by modifying a concentration of the solution of an inorganic or organic metal salt and the applied amount of the solution.

The inorganic metal salt used in the present invention is a salt of an inorganic base containing an inorganic acid and a metal, selected from those containing a monovalent metal and a polyvalent metal.

Examples of the inorganic metal salt containing a monovalent metal include halides (such as chlorides), carbonates, sulfates and phosphates of sodium, potassium, lithium or silver. Examples of the inorganic metal salt containing a polyvalent metal include halides (such as chlorides), carbonates, sulfates and phosphates of magnesium, calcium, zinc, copper, gold or aluminum. Among the inorganic metal salts, preferred are sodium chloride, magnesium sulfate, and aluminum sulfate.

The applied amount of the inorganic metal salt is only required to be equal to or more than such an amount that the inorganic metal salt starts depositing from the film of the present invention. From the viewpoint of achieving high gas barrier properties, in cases of an inorganic monovalent metal salt, the amount of the metal salt applied to one mole of carboxyl group in the cellulose composing cellulose fibers is 0.5 mol to 50 mol, preferably 0.5 mol to 45 mol, more preferably 1 mol to 45 mol, and even more preferably 10 mol to 45 mol. In cases of an inorganic polyvalent metal salt, the amount is 0.5 mol to 50 mol, preferably 1 mol to 50 mol, more preferably 10 mol to 50 mol, and even more preferably 15 mol to 40 mol. When applied in an amount of 50 mol or more, many particles of the inorganic metal salt deposit from the surface of the film material, and the film material is so bad a barrier film in quality that particles may be easily taken off even by touching with a hand.

The organic metals salt used in the present invention can be any metal salt as long as it is water-soluble. Examples of the organic metals salt include carboxylates, sulfates, and organophosphates of sodium, potassium, lithium, silver, magnesium, calcium or zinc. Among these salts, preferred are carboxylates, and more preferred are acetates and citrates of sodium or magnesium.

An amount of the organic metal salt applied is only required to be equal or more than such an amount that the organic metal salt starts depositing from the film of the present invention. From the viewpoint of achieving high gas barrier properties, the amount of the organic metal salt applied to one mole of carboxyl group in the cellulose composing cellulose fibers is 0.5 mol to 50 mol and preferably 0.5 mol to 15 mol. When applied in an amount of 50 mol or less, deposition of particles of the organic metal salt from the surface of the film material can be prevented, and the film material can continue having so good a barrier film in quality that particles may not be easily taken off by touching with a hand.

After this step, a film containing the specified cellulose fibers and the inorganic or organic metal salt or a molded composite containing a film containing the specified cellulose fibers and the inorganic or organic metal salt on the molded substrate can be obtained by drying the film material to which an inorganic or organic metal salt has been applied to make the inorganic or organic metal salt deposit. Alternatively, the molded composite can be prepared by layering and adhering the film containing specific cellulose fibers and the inorganic or organic metal salt on the substrate. For adhering, known methods can be used, including adhering with an adhesive and pasting by heat fusion. By controlling the content of carboxyl groups and an aspect ratio of cellulose fibers, the kind and the content of the inorganic metal salt or an organic metal salt, and the thickness of the film, the film can have intended properties according to design (high barrier properties, transparency, etc.).

The thickness of the film containing the specified cellulose fibers and the inorganic or organic metal salt can be appropriately set according to an intended use. When used as a gas barrier material, the thickness is preferably 20 to 2000 nm, more preferably 50 to 1000 nm, and even more preferably 100 to 500 nm.

Other method for producing a film containing specific cellulose fibers and an inorganic or organic metal salt than those described above includes applying a suspension of cellulose fibers containing a previously added inorganic or organic metal salt. The method however may cause aggregation of cellulose fibers in the suspension according to a kind and an amount added of the inorganic or organic metal salt, and may fail to obtain an intended film. To obtain a film containing cellulose fibers in more compact state, the step of applying a solution of an inorganic or organic metal salt is preferably performed after the step of forming a film material of a cellulose suspension.

The film thus produced can be examined for the presence or absence of an inorganic or organic metal salt by infrared absorption spectroscopy, X-ray diffractometry, and X-ray fluorescence spectroscopy. For example, a film material containing single magnesium sulfate as an inorganic metal salt shows a peak due to deformation vibration of an OH group of an inorganic metal salt hydrate between wave numbers 1650 to 1600cm$^{-1}$ other than a peak of a carboxyl group salt.

A moisture preventive layer may be optionally formed on one side or both sides of the film containing the specified cellulose fibers and an inorganic or organic metals salt or of the molded composite having the film containing the specified cellulose fibers and an inorganic or organic metals salt in order to increase moisture preventive properties.

For layering the moisture preventive layer, known methods can be used, including adhering with an adhesive, pasting by heat fusion, coating, spraying, and immersion. In this case, for the substrate and the moisture preventive layer having high moisture-proof properties, the following can be used, including plastics such as polyolefin and polyester, plastics on which an inorganic oxide (e.g., aluminum oxide and silicon oxide) is deposited, laminates of plastics with paperboard, wax, and wax-coated paper. For the substrate and the moisture preventive layer having high moisture-proof properties, preferably used are those having a water vapor permeability of 0.1 to 600 $g/m^2$·day, more preferably 0.1 to 300 $g/m^2$·day, and even more preferably 0.1 to 100 $g/m^2$·day. Use of the substrate having such a high moisture-proof properties and the formed product having the moisture preventive layer enables prevention of water vapor dissolution and dispersion in the gas barrier layer, thereby increasing water-vapor barrier properties.

The film containing specific cellulose fibers and an inorganic or organic metals salt and the molded composite having the molded substrate and the film containing specific cellulose fibers and an inorganic or organic metals salt on the surface of the substrate of the present invention can be used for, in addition to gas barrier materials, separation membranes for water purification, separation membranes for alcohol, polarizing films, polarizer protection films, flexible transparent substrates for display, separators for fuel cell, condensation-preventing sheets, antireflection sheets, UV shield sheets, and infrared shield sheets.

Examples

The following Examples demonstrate the present invention. Examples are intended to illustrate the present invention and not to limit the present invention.

Inventions (A1), (A4), (A5), (A6), (A8), and (A9) will be described in detail with reference to the following Examples.

(1) Average fiber diameter and average aspect ratio

For an average fiber diameter of cellulose fibers, a suspension of cellulose fibers diluted to a concentration of 0.0001% by mass was dropped on mica and dried to produce an observation sample. The observation sample was measured for fiber height with an atomic force microscope (Nanoscope III Tapping mode AFM, Digital Instruments, with a probe Point probe (NCH) available from Nanosensors). In an image showing recognizable cellulose fibers, five or more fibers were selected and used to determine the average fiber diameter from heights thereof.

An average aspect ratio was calculated from a viscosity of a diluted suspension (0.005 to 0.04% by mass) of cellulose fibers in water. The viscosity was measured at 20°C with a rheometer (MCR300, DG42 (double cylinder), by PHYSICA Anton Paar GmbH). Using the relationship between a mass concentration of cellulose fibers and a specific viscosity of a cellulose fiber suspension to water, an aspect ratio of cellulose fibers was backcalculated with the following formula and considered as an average aspect ratio of cellulose fibers.

$$\eta_{sp} = \frac{2\pi P^2}{45(\ln P - \gamma)} \times \frac{\rho_s}{\rho_0} \times C$$

Formula (8.138) for viscosity of solid stick molecule described in The Theory of Polymer Dynamics, M. DOI and D. F. EDWARDS, CLARENDON PRESS, OXFORD, 1986, P312 was used (in the present invention, solid stick molecule=cellulose fiber). The formula 1 is derived from Formula (8.138) and the relationship of $Lb^2 \times \rho_0 = M/N_A$. In the formulae, $\eta_{sp}$ represents a specific viscosity, $\pi$ represents the circle ratio, ln represents the logarithm natural, P represents an aspect ratio (L/b), $\gamma=0.8$, $\rho_s$ represents a density of a dispersion medium ($kg/m^3$), $\rho_0$ represents a density of cellulose crystal ($kg/m^3$), C represents a mass concentration of cellulose ($C=\rho/\rho_s$), L represents a fiber length, b represents a fiber width (assuming that the cross section of the cellulose fiber is a square), $\rho$ represents a concentration of cellulose fibers ($kg/m^3$), M represents a molecular weight, and $N_A$ represents Avogadro's number.

(2) Content of carboxyl groups in cellulose fibers (mmol/g)

In a 100 ml beaker, to 0.5 g by absolute dry weight of oxidized pulp, ion-exchanged water was added so that the total volume was 55 ml, followed by 5 ml of 0.01M aqueous solution of sodium chloride to obtain a pulp suspension. The pulp suspension was stirred with a stirrer until pulp was well dispersed. To this, 0.1M hydrochloric acid was added to adjust a pH to 2.5 to 3.0. The suspension was subjected to titration by injecting 0.05 M aqueous solution of sodium hydroxide at a waiting time of 60 seconds with an automated titrator (AUT-501, DKK-Toa Corporation). A conductivity and a pH of the pulp suspension were repeatedly measured every one minute until a pH of the suspension reached to around 11. The resultant conductivity curve was used to determine a sodium hydroxide titer and calculate the content of carboxyl groups.

A natural cellulose fiber exists as a bundle of high crystalline microfibrils formed by aggregation of about 20 to 1500 cellulose molecules. TEMPO oxidization in the present invention enables selective introduction of a carboxyl group to the surface of the crystalline microfibril. In practical, a carboxyl group was introduced only to the surface of cellulose crystal, but the content of carboxyl groups defined by the method of measurement above represents an average value per weight of cellulose.

(3) Light transmittance

Using a spectrophotometer (UV-2550, Shimadzu Corporation), a suspension of 1% by mass concentration was measured for light transmittance (%) at a wavelength of 660 nm with an optical path length of 1 cm.

(4) Mass percentage of fine cellulose fibers in a cellulose fiber suspension (a content of fine cellulose fibers) (%)

0.1% by mass suspension of cellulose fibers was prepared and measured for solid content. The suspension was suction-filtered through a 16 $\mu$m-mesh glass filter (25G P16, Shibata Scientific Technology Ltd.). The filtrate was measured for solid content. The solid content of the filtrate (C1) was divided by the solid content of the suspension before filtration (C2). Avalue (C1/C2) was considered as the content of fine cellulose fibers (%).

(5) Observation of a suspension

A suspension diluted to 1% by mass of solid content was prepared. A drop thereof was placed on a slide glass and covered with a cover glass to provide an observation sample. Arbitrarily selected five spots in the observation sample were observed with an optical microscope (ECLIPSE E600 POL, Nikon Corporation) at 400-fold magnification for the presence or absence of a cellulose particle having a particle diameter of 1 $\mu$m or more. The "particle" refers to that having a nearly spherical shape and a projection geometry of the shape on a plane in which a rectangle enclosing the geometry has a ratio of a long axis to a short axis (long axis/short axis) of 3 at the maximum. The diameter of the particle is defined by an arithmetic average of the long and short axes. Observation under crossed nicols may be employed for a clearer observation.

(6) Oxygen permeability (equal pressure method) ($cm^3/m^2 \cdot day \cdot Pa$)

An oxygen permeability was measured under conditions of 23°C and 50% RH with an oxygen permeability tester OX-TRAN2/21 (model ML&SL, MOCON, Inc.) in accordance with the method of JIS K7126-2, Appendix A, and more specifically, in an atmosphere of oxygen gas of 23°C and 50% RH and nitrogen gas (carrier gas) of 23°C and a humidity of 50%.

Preparation Example A1 [preparation of cellulose fibers]

(1) Starting Material, Catalyst, Oxidant, and Cooxidant

Natural fiber: bleached softwood kraft pulp (Fletcher Challenge Canada Ltd., trade name: Machenzie, CSF 650 ml)
TEMPO: commercial product (ALDRICH, Free radical, 98%)
Sodium hypochlorite: commercial product (Wako Pure Chemical Industries, Ltd., C1: 5%)
Sodium bromide: commercial product (Wako Pure Chemical Industries, Ltd.)

(2) Procedure of preparation

100 g of the bleached softwood kraft pulp was sufficiently stirred in 9900 g of ion-exchanged water. To this, per 100 g by mass of the pulp, 1.25% by mass of TEMPO, 12.5% by mass of sodium bromide, and 28.4% by mass of sodium hypochlorite were added in this order. The pulp was oxidized for 120 minutes at 20°C while keeping the pH at 10.5 by dropping 0.5M sodium hydroxide using a pH-stat.
After the dropping ended, the resultant oxidized pulp was sufficiently washed with ion-exchanged water and dehydrated. 4.5g of the oxidized pulp and 295.5g of ion-exchanged water were mixed for 120 minutes with a mixer (Vita-Mix-Blender ABSOLUTE, Osaka Chemical Co., Ltd.) for pulverizing fibers to obtain a suspension of cellulose fibers. The suspension had a solid content of 1.5% by mass. Cellulose fibers had an average fiber diameter of 3.1 nm, an average aspect ratio of 240, the content of carboxyl groups of 1.2 mmol/g. In the suspension, there was no cellulose particle having a diameter of 1 $\mu$m or more. The suspension of cellulose fibers had a light transmittance of 97.1%, and a content of fine cellulose fibers of 90.9%.

Example A1 (Preparation of a cellulose fiber suspension)

To a suspension of cellulose fibers prepared as in Preparation Example A1, 2 chemical equivalents (eq.) to 1M aqueous solution of hydrochloric acid was added. A mixture was stirred for 60 minutes to produce aggregates.
The aggregates were filtered through a glass filter of a diameter of 16 $\mu$m. The filtered product (3 g of solid cellulose fibers) was washed with the 1000 times amount of ion-exchanged water.
The washed product was placed in a conical flask. To the product, a mixed solution of 10% by mass ammonia water and zinc oxide (12.6 g and 0.24 g, respectively) was added. To the mixture, ion-exchanged water was added in such amount that a solid cellulose fiber content was 1.3% by mass. The mixture was stirred for 120 minutes with a magnetic stirrer to obtain a suspension of cellulose fibers according to the present invention. The suspension contained ammonia and zinc oxide in amounts of 20 equivalents and 0.8 equivalent, respectively, to the carboxyl group of cellulose fibers.

Example A2 (Preparation of a suspension of cellulose fibers)

Aggregates of cellulose fibers were washed and filtered as in Example A1. To the product, a mixed solution of 10% by mass ammonia water and zinc oxide (24.6 g and 0.24 g, respectively) was added. To the mixture, ion-exchanged water was added in such amount that a solid cellulose fiber content was 1.3% by mass. The mixture was stirred for 120 minutes with a magnetic stirrer to obtain a suspension of cellulose fibers according to the present invention. The suspension contained ammonia and zinc oxide in amounts of 40 equivalents and 0.8 equivalent, respectively, to the carboxyl group of cellulose fibers.

Example A3 (Preparation of a suspension of cellulose fibers)

Aggregates of cellulose fibers were similarly washed and filtered as in Example A1. To the product, a mixed solution of 10% by mass ammonia water and zinc oxide (3.2 g and 0.24 g, respectively) was added. To the mixture, ion-exchanged water was added in such amount that a solid cellulose fiber content was 1.3% by mass. The mixture was stirred for 120 minutes with a magnetic stirrer to obtain a suspension of cellulose fibers according to the present invention. The suspension contained ammonia and zinc oxide in amounts of 5 equivalents and 0.8 equivalent, respectively, to the carboxyl group of cellulose fibers.

Example A4 (Preparation of a suspension of cellulose fibers)

This Example excluded the first step using an aqueous solution of 1M hydrochloric acid and the step of filtering in Example A1. To 200 g of suspension of cellulose fibers prepared as in Preparation Example A1 (solid content: 1.5% by mass), a mixed solution of 10% by mass ammonia water and zinc oxide (12.6 g and 0.24 g, respectively) was added. To the mixture, ion-exchanged water was added in such amount that a solid cellulose fiber content was 1.3% by mass. A mixture was stirred for 120 minutes with a magnetic stirrer to obtain a suspension of cellulose fibers according to the present invention. The suspension contained ammonia and zinc oxide in amounts of 20 equivalents and 0.8 equivalent, respectively, to the carboxyl group of cellulose fibers.

Examples A5 to A8 (Preparation of a molded composite)

Each suspension of cellulose fibers prepared in Examples A1 to A4 was applied on a side of a poly(ethylene terephthalate) (PET) sheet (trade name: Lumirror, Toray Industries Inc., sheet thickness: 25 $\mu$m) with a bar coater (#50), dried for 120 minutes at an ambient temperature, and hold for 30 minutes in a thermostat chamber set to a heating temperature as shown in Table A1. Each product was allowed to cool for 2 hours or more at an ambient temperature to obtain each molded composite containing PET and a cellulose fiber layer thereon. Measured values of oxygen permeability at 50% relative humidity are shown in Table A1.

Comparative Example A1

To a suspension of cellulose fibers prepared as in Preparation Example A1, ion-exchanged water was added such that a concentration was 1.3% by mass, and stirred for 120 minutes with a magnetic stirrer. The resultant suspension was applied on a side of a poly(ethylene terephthalate) (PET) sheet (trade name: Lumirror, Toray Industries Inc., sheet

thickness: 25 $\mu$m) with a bar coater (#50), dried for 120 minutes at an ambient temperature, and hold for 30 minutes in a thermostat chamber set to a heating temperature as shown in Table A1. The product was allowed to cool for 2 hours or more at an ambient temperature to obtain a molded composite containing PET and a cellulose fiber layer thereon. For respective products, measured values of oxygen permeability at 50% relative humidity are shown in Table A1.

Comparative Example A2

A suspension of cellulose fibers was prepared as in Example A1, except that only ammonia water and ion-exchanged water were used without zinc oxide. A molded composite having a cellulose fiber layer was prepared as in Comparative Example A1. Comparative Example A2 is an example for a molded composite having a cellulose fiber layer prepared from a suspension of cellulose fibers in which Na of a carboxyl group is substituted by $NH_4$ (herein, the cellulose fiber layer was referred to as "$NH_4$-type" as prepared with only ammonia, but without zinc oxide). For respective products, measured values of oxygen permeability at 50% relative humidity are shown in Table A1.

Table A1

| | Example A5 | | | Example A6 | | | Example A7 | | | Example A8 | Comparative example A1 | | | Comparative example A2 | | | Reference [1] |
|---|---|---|---|---|---|---|---|---|---|---|---|---|---|---|---|---|---|
| Substrate | PET (25μm) | | | | | | | | | | | | | | | | |
| Cellulose fiber layer (conjugated acid) [2] | Zn of Example A1 | | | Zn of Example A2 | | | Zn of Example A3 | | | Zn of Exmaple A4 | Na | | | $NH_4$ | | | - |
| Amount of ammonia (equivalent) | 20 | 20 | 20 | 40 | 40 | 40 | 5 | 5 | 5 | 20 | 0 | 0 | 0 | 20 | 20 | 20 | - |
| Amount of zinc oxide (eqivalent) | 0.8 | 0.8 | 0.8 | 0.8 | 0.8 | 0.8 | 0.8 | 0.8 | 0.8 | 0.8 | 0 | 0 | 0 | 0 | 0 | 0 | - |
| Heating temperature (°C) [3] | - | 110 | 150 | - | 110 | 150 | - | 110 | 150 | 110 | - | 110 | 150 | - | 110 | 150 | - |
| Oxygen permeability($\times 10^{-5}$ $cm^3/m^2 \cdot day \cdot Pa$) | 22.41 | 8.88 | 3.69 | 27.35 | 11.02 | 5.39 | 28.18 | 5.73 | 2.77 | 13.07 | 31.93 | 20.22 | 6.92 | 41.71 | 29.37 | 8.94 | 50.49 |

[1] Reference means monomer of PET sheet
[2] Conjugated acid of cellulose fiber layer refers to a conjugated acid (metal and ammonia) bonding to a carboxyl group. Example: Zn means that Zn metal ion bonds to a carboxyl group.
[3] - means no heat treatment.

As clearly shown in Table A1, the molded composite treated with the higher temperature had the higher oxygen barrier properties. The reason of the result is thought that the cross-linking reaction between a carboxyl group and zinc on the surface of a cellulose fiber at the higher temperature progressed to the larger degree to form a film having the more compact structure.

Also shown in Table A1, comparing among molded composites heat-treated, Example A7 (molded composite prepared using Example A3 in which an amount of ammonia added was 5 equivalents) had higher oxygen barrier properties than that of Example A5 (molded composite prepared using Example A1 in which an amount of ammonia added was 20 equivalents) and Example A6 (molded composite prepared using Example A2 in which an amount of ammonia added was 40 equivalents). It is considered to be the reason that a large amount of added ammonia prevents a uniform film of a coating material from forming.

Examples A5 to A8 prepared using Examples A1 to A4 had higher oxygen barrier properties than that of Comparative Examples A1 to A2 prepared using suspensions of Na-type and NH4-type cellulose fibers under the same heating conditions. This result shows that the suspension of cellulose fibers containing a polyvalent metal and a volatile base according to the present invention is suitable for producing an oxygen barrier film.

Example A8 had lower oxygen barrier properties than that of Example A5. It is meant that cellulose fibers prepared via the structure change of Cell -COO⁻Na⁺→Cell-COOH by adding hydrochloric acid will more easily have a cross-linking structure of -COO-M-OOC- with zinc in the subsequent step of production.

Example A9

Aggregates of cellulose fibers were washed and filtered as in Example A1. To the product, a mixed solution of 10% by mass ammonia water and zinc oxide (12.8 g and 0.15 g, respectively) was added. To the mixture, ion-exchanged water was added in such amount that a solid cellulose fiber content was 1.3% by mass. The mixture was stirred for 120 minutes with a magnetic stirrer to obtain a suspension of cellulose fibers according to the present invention. The suspension contained ammonia and zinc oxide in amounts of 20 equivalents and 0.5 equivalent, respectively, to the carboxyl group of cellulose fibers.

The suspension of cellulose fibers was applied on a side of a poly(ethylene terephthalate) (PET) sheet (trade name: Lumirror, Toray Industries Inc., sheet thickness: 25 μm) with a bar coater (#50), dried for 120 minutes at an ambient temperature, and hold for 30 minutes in a thermostat chamber set to a heating temperature as shown in Table A2. The product was allowed to cool for 2 hours or more at an ambient temperature to obtain a molded composite containing PET and a cellulose fiber layer thereon. For respective products, measured values of oxygen permeability at 50% relative humidity are shown in Table A2.

Example A10

A suspension of cellulose fibers was prepared as in Example A9, except that a mixed solution of 10% by mass of ammonia water and zinc oxide (12.8 g and 0.03 g respectively) was used. A molded composite was also prepared as in Example A9. For respective products, measured values of oxygen permeability at 50% relative humidity are shown in Table A2.

Example A11

A suspension of cellulose fibers was prepared as in Example A9, except that copper oxide was used instead of zinc oxide. A molded composite was also prepared as in Example A9. For respective products, measured values of oxygen permeability at 50% relative humidity are shown in Table A2.

Table A2

| | Example A9 | | Example A10 | | Example A11 | |
|---|---|---|---|---|---|---|
| Substrate | PET(25μm) | | | | | |
| Cellilose fiber layer (conjugated acid) ※[1] | Zn | | Zn | | Cu | |
| Amount of ammonia (equivalent) | 20 | 20 | 20 | 20 | 20 | 20 |
| Amount of zinc oxide(equivalent) | 0.5 | 0.5 | 0.1 | 0.1 | - | - |
| Amount of copper oxide(equivalent) | - | - | - | - | 0.5 | 0.5 |
| Heating temperature (°C) ※[2] | - | 150 | - | 150 | - | 150 |

(continued)

| | Example A9 | | Example A10 | | Example A11 | |
|---|---|---|---|---|---|---|
| Oxygen permeability ($\times 10^{-5}$ cm$^3$/m$^2$·day·Pa) | 18.6 | 3.5 | 40.0 | 5.2 | 38.8 | 4.2 |

※1 Conjugated acid of cellulose fiber layer refers to a conjugated acid (metal and ammonia) bonding to a carboxyl group.
Example : Zn means that Zn ion bonds to a carboxyl group.
※2 -means no heat treatment.

Examples A9, A10, and A5 (in Table A1) are molded composites prepared with cellulose suspensions containing different amounts of added zinc oxide. Examples A5, A9, and A10 in which amounts of zinc oxide added were 0.1 to 0.8 equivalents had higher oxygen barrier properties than that of Comparative Examples A1 and A2 prepared using suspensions of Na-type and NH$_4$-type cellulose fibers shown in Table A1. Since zinc is a divalent metal, Example A9 in which zinc was added in an amount of 0.5 equivalents to the content of carboxyl groups in cellulose fibers showed the highest oxygen barrier properties.

Example A11 is a molded composite prepared using copper as a polyvalent metal. Example A11 showed higher oxygen barrier properties than that of Comparative Examples A1 and A2 shown in Table A1. This result shows that the suspension of cellulose fibers containing a polyvalent metal and a volatile base according to the present invention is suitable for producing an oxygen barrier film.

Inventions (B1), (B5), (B6), and (B7) will be described in detail with reference to the following Examples.

The following properties were measured as described above.

(1) Average fiber diameter and average aspect ratio of cellulose fibers
(2) Content of carboxyl groups of cellulose fibers (mmol/g)
(3) Light transmittance
(4) Mass percentage of fine cellulose fibers in a cellulose fiber suspension (content of fine cellulose fibers) (%)
(5) Observation of a cellulose fiber suspension
(7) Oxygen permeability (equal pressure method) (cm$^3$/m$^2$·day·Pa)
The following properties were measured as described below.
(6) Oxygen permeability (differential pressure method) (cm$^3$/m$^2$.day·Pa)
The sample was evacuated for 24 hours and measured under conditions of 23°C and 0% RH with a gas permeability tester (model M-C3, Toyo Seiki seisaku-sho, Ltd.) in accordance with ASTM D-1434-75M.
(8) Water vapor permeability (g/m$^2$·day)
A water vapor permeability was measured by a cup method under conditions of 40°C and 90% RH in accordance with JIS Z0208.
(9) Mole number of an inorganic or organic metal salt

A mole number of an inorganic or organic metal salt attached was to one mole of carboxyl group in cellulose fibers. The mole number was determined from a calculated percentage by mass of the inorganic or organic metal salt using masses of a film before and after the inorganic or organic metal salt was attached.

Preparation Example B1

[Preparation of a cellulose fiber suspension]

(1) A starting material, a catalyst, an oxidant, and a cooxidant were same to those described in Example A1.
(2) Procedure of Preparation

100 g of the bleached softwood kraft pulp was sufficiently stirred in 9900 g of ion-exchanged water. To this, per 100 g by mass of the pulp, 1.25% by mass of TEMPO, 12.5% by mass of sodium bromide, and 28.4% by mass of sodium hypochlorite were added in this order. The pulp was oxidized for 120 minutes while keeping the pH at 10.5 by dropping 0.5M sodium hydroxide using a pH-stat.

After the dropping ended, the resultant oxidized pulp was sufficiently washed with ion-exchanged water and dehydrated. Then, 3.9 g of the oxidized pulp and 296.1g of ion-exchanged water were mixed for 120 minutes with a mixer (Vita-Mix-Blender ABSOLUTE, Osaka Chemical Co.,Ltd.) for pulverizing fibers to obtain a suspension of cellulose fibers. The suspension had a solid content of 1.3% by mass. Cellulose fibers had an average fiber diameter of 3.1 nm, an average aspect ratio of 240, the content of carboxyl groups of 1.2 mmol/g. In the suspension, there was no cellulose particle having a diameter of 1 μm or more. The suspension had a light transmittance of 97.1%, and a content of fine cellulose fibers of 90.9%.

Examples B1 to B7, Comparative Example B1

A suspension of cellulose fibers (content of carboxyl groups: 1.2 mmol/g) prepared as in Preparation Example B1 was adjusted to 0.7% by mass of solid content and applied on a side of a poly(ethylene terephthalate) (PET) sheet (trade name: Lumirror, Toray Industries Inc., sheet thickness: 7 μm) with a bar coater (#50).

For each aqueous solution of an inorganic metal salt shown in Table B1, immediately after the sheet was coated, while a coating film was still wet, on the surface of the film was sprayed an aqueous solution of an inorganic metal salt such that a mole number of the inorganic metal salt to one mole of carboxyl group in cellulose fibers was as shown in Table B1. Then, the sprayed film was dried for 360 minutes at 23°C to obtain a molded composite having a layer of a film containing specific cellulose fibers and the inorganic metal salt. In Comparative Example B1, a layer of a film containing cellulose fibers was similarly formed on the surface of a substrate as in Example B1, except that an aqueous solution of an inorganic metal salt was not applied. In Comparative Example B1, the film was formed by only applying a suspension of cellulose fibers in which carboxyl groups formed a sodium salt, and did not contain the inorganic metal salt. Both gas barrier layers (layers of a film formed on the surface of a substrate) of Examples and Comparative Example had a thickness of about 450 nm after dried. These were measured for water vapor permeability. Results are shown in Table B1.

Table B1 Relation between the kind of metal salt and barrier properties

| | | Example | | | | | | Comparative example |
| --- | --- | --- | --- | --- | --- | --- | --- | --- |
| | | B1 | B2 | B4 | B5 | B6 | B7 | B1 |
| Kind of substrate／thickness (μm) | | PET／7 | PET／7 | PET／7 | PET／7 | PET／7 | PET／7 | PET／7 |
| Thickness of gas barrier (nm) | | 450 | 450 | 450 | 450 | 450 | 450 | 450 |
| Content of carboxyl group in cellulose fiber (mmol/g) | | 1.2 | 1.2 | 1.2 | 1.2 | 1.2 | 1.2 | 1.2 |
| Mole number of metal salt | Sodium chloride (mol) | 20.0 | — | — | — | — | — | — |
| | Potassium chloride (mol) | — | 20.9 | — | — | — | — | — |
| | Sodium hydrogen carbonate (mol) | — | — | 11.9 | — | — | — | — |
| | Sodium carbonate (mol) | — | — | — | 9.3 | — | — | — |
| | Magnesium sulfate (mol) | — | — | — | — | 8.4 | — | — |
| | Alminium sulfate (mol) | — | — | — | — | — | 1.1 | — |
| Water vapor permeability (g／m$^2$·day) | | 56.2 | 76.1 | 68.3 | 67.0 | 61.0 | 73.9 | 85.4 |

The mole number of metal salt is the mole number of metal salt per carboxyl group in cellulose fiber

Table B1 shows relation between a kind of inorganic metal salt and water vapor barrier properties. Each system of Examples B1 to B7 attaching any inorganic metal salt exhibited increased water vapor barrier properties, compared with the film of Comparative Example B1 not attached with the inorganic metal salt. Sodium chloride among inorganic monovalent metal salts and magnesium sulfate and aluminum sulfate among inorganic polyvalent metal salts particularly provided high water vapor barrier properties with lower mole number.

Examples B8 to B12

In each Example, a suspension of cellulose fibers (content of carboxyl groups: 1.2 mmol/g) prepared as in Preparation Example B1 was adjusted to 0.7% by mass of solid content and applied on a side of a poly (ethylene terephthalate) (PET) sheet (trade name; Lumirror, Toray Industries Inc., sheet thickness: 7 $\mu$m) with a bar coater (#50).

Immediately after the sheet was coated, while a coating film was still wet, on the surface of the film was sprayed an aqueous solution of sodium chloride such that a mole number of sodium chloride to one mole of carboxyl group in cellulose fibers was as shown in Table B2. Then, the sprayed film was dried for 360 minutes at 23°C to obtain a molded composite having a layer of a film containing specific cellulose fibers and the inorganic metal salt. A gas barrier layer (layer of a film formed on the surface of a substrate) had a thickness of about 450 nm after dried. The product was measured for oxygen permeability and water vapor permeability. Results are shown in Table B2. Oxygen permeability was measured by the differential pressure method.

Table B2

Table B2 Relationship between the amount of NaCl and barrier properties

|  | Example | | | | | Comparative example |
|---|---|---|---|---|---|---|
|  | B8 | B9 | B10 | B11 | B12 | B1 |
| Kind of substrate/thickness ($\mu$m) | PET/7 | PET/7 | PET/7 | PET/7 | PET/7 | PET/7 |
| Thickness of gas barrier(nm) | 450 | 450 | 450 | 450 | 450 | 450 |
| Content of carboxyl group in cellulose fiber(mmol/g) | 1.2 | 1.2 | 1.2 | 1.2 | 1.2 | 1.2 |
| Sodium chloride (mol) | 6.2 | 20.9 | 24.8 | 43.3 | 46.9 | - |
| Oxygen permeability(equal pressure method) ($10^{-5}$ $cm^3/m^2 \cdot day \cdot Pa$) | 1.25 | 1.13 | 0.85 | 0.95 | 26.2 | 1.40 |
| Water vapor permeability ($g/m^2 \cdot day$) | 79.8 | 56.2 | 64.4 | 33.5 | 58.6 | 85.4 |
| The mole number of metal salt is the mole number of metal salt per carboxyl group in cellulose fiber Oxygen permeability was devaluated by the differential pressure method | | | | | | |

Table B2 shows relation between an amount of NaCl attached and oxygen permeability and water vapor permeability. Examples B8 to B12 attaching sodium chloride at a mole number within the range of 0.5 to 50 exhibited increased water vapor permeability, compared with Comparative Example B1 without the inorganic metal salt. Examples B8 to B11 attaching sodium chloride at a mole number within the range of 0.5 to 45 exhibited increased oxygen permeability and water vapor permeability, compared with Comparative Example B1. Water vapor permeability was increased with increasing a mole number. Example B12 in which the mole number was over 45 exhibited lower oxygen barrier properties than that of Comparative Example B1. The result suggests that addition of an inorganic metal salt disrupted a part of a compact film structure to provide pores that could pass an oxygen molecule.

Examples B13 to B18 and Comparative Example B2

In Example B13, a suspension of cellulose fibers (content of carboxyl groups: 1.2 mmol/g) prepared as in Preparation Example B1 was adjusted to 0.9% by mass of solid content. To this, 0.7 mol of magnesium sulfate per mole of carboxyl group in cellulose fibers (internal addition) was added. Then, the suspension was applied on a side of a poly (ethylene terephthalate) (PET) sheet (trade name: Lumirror, Toray Industries Inc., sheet thickness: 25 $\mu$m) with a bar coater (#50), and dried for 360 minutes at 23°C to obtain a molded composite having a layer of a film containing specific cellulose fibers and the inorganic metal salt.

In each of Examples B14 to B18, a suspension of cellulose fibers (content of carboxyl groups: 1.2 mmol/g) prepared in Preparation Example B1 was adjusted to 0.9% by mass of solid content and applied on a side of a poly (ethylene terephthalate) (PET) sheet (trade name: Lumirror, Toray Industries Inc., sheet thickness: 25 $\mu$m) with a bar coater (#50).

Immediately after the sheet was coated, while a coating film was still wet, on the surface of the film was sprayed an aqueous solution of magnesium sulfate such that a mole number of magnesium sulfate to one mole of carboxyl group in cellulose fibers was as shown in Table B3 (spray addition). Then, the sprayed film was dried for 360 minutes at 23°C to obtain a molded composite having a layer of a film containing specific cellulose fibers and the inorganic metal salt.

In Comparative Example B2, first, to 3 g of the oxidized pulp before pulverized in Preparation Example B1 (the pulp oxidized, washed with ion-exchanged water, and dehydrated), 597g of ion-exchanged water was added to obtain a suspension of oxidized cellulose fibers having 0.5% by mass solid content. Next, to the suspension, 9 g of 10% by mass aqueous solution of magnesium chloride was added, and gently stirred for 60 minutes. Then, cellulose fibers were sufficiently washed with ion-exchanged water to obtain cation-exchanged cellulose fibers. As used herein, the "cation-exchanged cellulose fiber" refers that having a carboxyl group converted from a Na-salt type to a Mg-salt type. 3 g of the cation-exchanged cellulose fibers and 297 g of ion-exchanged water were stirred for 10 minutes with a mixer (Vita-Mix-Blender ABSOLUTE, Osaka Chemical Co., Ltd.) for pulverizing fibers to obtain a suspension of cellulose fibers having a carboxyl group converted from a sodium-salt type to a magnesium-salt type. The suspension had a solid content of 1.0% by mass. The suspension was applied on a side of a poly(ethylene terephthalate) (PET) sheet (trade name: Lumirror, Toray Industries Inc., sheet thickness: 25 $\mu$m) with a bar coater (#50), and dried for 360 minutes at 23°C to obtain a molded composite having a layer of a film. The film was measured by infrared absorption spectroscopy to confirm the absence of the inorganic metal salt in the film.

Each gas barrier layer (layer of a film formed on the surface of a substrate) of Examples B13 to B18 had a thickness of about 600 nm after dried. A gas barrier layer (layer of a film formed on the surface of a substrate) of Comparative Example B2 had a thickness of about 700 nm after dried. These were measured for oxygen permeability and water vapor permeability. Results are shown in Table B3. Oxygen permeability was measured by the equal pressure method.

Table B3

TableB3 Relationship between the amount of MgSO$_4$ and barrier properies and difference of external addition

| | Example | | | | | | Comparative example |
|---|---|---|---|---|---|---|---|
| | B13 | B14 | B15 | B16 | B17 | B18 | B2 |
| Kind of substrate/ thickness ($\mu$m) | PET/25 | PET/25 | PET/25 | PET/25 | PET/25 | PET/25 | PET/25 |
| Thickness of gas barrier(nm) | 600 | 600 | 600 | 600 | 600 | 600 | 700 |
| Content of carboxyl group in cellulose fiber (mmol/g) | 1.2 | 1.2 | 1.2 | 1.2 | 1.2 | 1.2 | 1.2 |
| Method of addition | Internal addition | Spray addition | Spray addition | Spray addition | Spray addition | Spray addition | - |
| Magnesium sulfate (mol) | 0.7 | 2.4 | 3.9 | 12.2 | 19.8 | 42.2 | - |
| Oxygen permeability (equal pressure method) (10$^{-5}$ cm$^3$/m$^2$·day·Pa) | 24.6 (aggregation occur) | 24.2 | 22.3 | 9.57 | 0.80 | 0.79 | 26.1 |
| Water vapor permeability (g/m$^2$·day) | 20.7 (aggregation occur) | 18.9 | 16.9 | 15.2 | 14.1 | 18.6 | 22.3 |
| The mole number of metal salt is the mole number of metal salt per carboxyl group in cellulose fiber Oxygen permeability was evaluated by the equal pressure method | | | | | | | |

Table B3 shows results of evaluation of Examples B13 to B18 and Comparative Example B2. Example B13 was prepared by internal addition of magnesium sulfate to the cellulose suspension, and exhibited increased oxygen barrier properties and water barrier properties due to the presence of specific cellulose fibers and the inorganic metal salt in the film, compared with the molded composite having a film without an inorganic metal salt of Comparative Example B2, although Example B13 generated some aggregates in preparation.

Particularly in Examples B14 to B18 employing the spray addition, oxygen barrier properties and water barrier properties were significantly increased with an increasing amount of magnesium sulfate. Oxygen barrier properties were particularly found to be increased to about 30 times. The reason was assumed that Examples B14 to B18 performed the step of applying an aqueous solution of an inorganic metal salt after the step of forming a film material of a cellulose suspension, and thus aggregation of cellulose fibers in the suspension could be prevented to allow to form a more compact film of cellulose fibers. Water barrier properties were, however, decreased when the amount was over 40 mol. The mechanism might be same to that in Example B12.

Examples B19 to B21 and Comparative Example B3

In Example B19, a suspension of cellulose fibers (content of carboxyl groups: 1.2 mmol/g) prepared as in Preparation Example B1 was adjusted to 0.9% by mass of solid content. To this, 13.7 mol of sodium chloride per mole of carboxyl group in cellulose fibers (internal addition) was added. Then, the suspension was applied on a side of a poly (ethylene terephthalate) (PET) sheet (trade name: Lumirror, Toray Industries Inc. , sheet thickness: 25 $\mu$m) with a bar coater (#50), and dried for 360 minutes at 23°C to obtain a molded composite having a layer of a film containing specific cellulose fibers and the inorganic metal salt.

In each of Examples B20 and B21, the suspension of cellulose fibers (content of carboxyl groups: 1.2 mmol/g) prepared as in Preparation Example B1 was adjusted to 0.9% by mass of solid content and applied on a side of a poly (ethylene terephthalate) (PET) sheet (trade name: Lumirror, Toray Industries Inc., sheet thickness: 25 $\mu$m) with a bar coater (#50).

Immediately after the sheet was coated, while a coating film was still wet, on the surface of the film was sprayed an aqueous solution of sodium chloride such that a mole number of sodium chloride to one mole of carboxyl group in cellulose fibers was as shown in Table B4 (spray addition). Then, the sprayed film was dried for 360 minutes at 23°C to obtain a molded composite having a layer of a film containing specific cellulose fibers and the inorganic metal salt.

In Comparative Example B3, a film of cellulose fibers was similarly formed on the surface of a substrate as in Example 20, except that an aqueous solution of sodium chloride was not sprayed. Comparative Example 3 was prepared only by applying a suspension of cellulose fibers having a carboxyl group of a sodium-salt type, and did not contain an inorganic metal salt in the film (the film was measured by infra-red absorption spectroscopy to confirm the absence of the inorganic metal salt in the film).

Each gas barrier layer (layer of a film formed on the surface of a substrate) of Examples B19 to B21 and Comparative Examples B3 had a thickness of about 600 nm after dried. These were measured for oxygen permeability and water vapor permeability. Results are shown in Table B4. Oxygen permeability was measured by the equal pressure method.

Table B4 Relationship of the amount of NaCl and barrier properties and difference of external addition and internal addition

| | Example | | | Comparative example |
|---|---|---|---|---|
| | B19 | B20 | B21 | B3 |
| Kind of substrate sheet/ thickness ($\mu$m) | PET/25 | PET/25 | PET/25 | PET/25 |
| Thickness of gas barrier (nm) | 600 | 600 | 600 | 600 |
| Content of carboxyl group in cellulose fiber (mmol/g) | 1.2 | 1.2 | 1.2 | 1.2 |
| Methof of addition | Internal addition | Spray addition | Spray addition | - |
| Sodium chloride (mol) | 13.7 | 9.3 | 15.4 | - |
| Oxygen permeability (equal pressure method) ($10^{-5}$ cm$^3$/m$^2$·day·Pa) | 28.9 | 25.5 | 20.1 | 36.1 |

(continued)

| | Example | | | Comparative example |
|---|---|---|---|---|
| | B19 | B20 | B21 | B3 |
| Water vapor permeability (g/m$^2$·day) | 22.9 | 20.6 | 14.6 | 23.3 |
| The mole number of metal salt is the mole number of metal salt per carboxyl group in cellulose fiber Oxygen permeability was evaluated by the equal pressure method | | | | |

Table B4 shows results of evaluation of Examples B19 to B21 and Comparative Example B3. Example B19 was prepared by internal addition of sodium chloride to the cellulose suspension, and exhibited increased oxygen barrier properties and water barrier properties due to the presence of specific cellulose fibers and the inorganic metal salt in the film, compared with the molded composite having a film without an inorganic metal salt of Comparative Example B3. Particularly in Examples B20 and B21 employing the spray addition, oxygen barrier properties and water barrier properties were significantly increased with an increasing amount of sodium chloride. It was also found that Examples B20 and B21 performing the step of applying an aqueous solution of an inorganic metal salt after the step of forming a film material of a cellulose suspension exhibited higher oxygen barrier properties and water barrier properties than that of Example B19 employing the internal addition.

Example B22

A suspension (content of carboxyl groups: 1.2 mmol/g) of cellulose fibers (content of carboxyl groups: 1.2 mmol/g, amount of oxidized pulp: 1.3% by mass) prepared as in Preparation Example B1 was adjusted to 0.7% by mass of solid content and applied on a side of a poly(ethylene terephthalate) (PET) sheet (trade name: Lumirror, Toray Industries Inc., sheet thickness: 7 $\mu$m) with a bar coater (#50).
Immediately after the sheet was coated, while a coating film was still wet, on the surface of the film was sprayed an aqueous solution of sodium chloride such that a mole number of sodium chloride to one mole of carboxyl group in cellulose fibers was as shown in Table B5. Then, the sprayed film was dried for 360 minutes at 23°C to obtain a molded composite having a layer of a film containing specific cellulose fibers and the inorganic metal salt.

Example B23

A suspension of cellulose fibers (content of carboxyl groups: 1.2 mmol/g, amount of oxidized pulp: 1.3% by mass) prepared in Preparation Example B1 was adjusted to 0.7% by mass of solid content, applied on a side of a poly (ethylene terephthalate) (PET) sheet (trade name: Lumirror, Toray Industries Inc. , sheet thickness: 7 $\mu$m) with a bar coater (#50), and dried for 360 minutes at 23°C.
Then, on the surface of a film of cellulose fibers was sprayed an aqueous solution of sodium chloride such that a mole number of sodium chloride to one mole of carboxyl group in cellulose fibers was as shown in Table B5. The sprayed film was dried for 360 minutes at 23°C to obtain a molded composite having a layer of a film containing specific cellulose fibers and the inorganic metal salt.
Each gas barrier layer (layer of a film formed on the surface of a substrate) of Examples B22 and B23 had a thickness of about 450 nm after dried. These were measured for oxygen permeability and water vapor permeability. Results are shown in Table B5. Oxygen permeability was measured by the differential pressure method.

Table B5 difference of conditions for forming a film

| | Example | | Comparative exmple |
|---|---|---|---|
| | B22 | B23 | B1 |
| Kind of substrate sheet/thickness (μm) | PET/7 | PET/7 | PET/7 |
| Thickness of gas barrier (nm) | 450 | 450 | 450 |
| Content of carboxyl group in cellulose fiber (mmol/g) | 1.2 | 1.2 | 1.2 |
| Mole number of metal salt — Casting, spraying an NaCl solution to a wet film, and drying at 23°C | 20.0 | — | — |
| Mole number of metal salt — Casting, drying at 23°C, spraying an NaCl solution, and drying at 23°C | — | 25.0 | — |
| Oxygen permeability (equal pressure method) ($10^{-5}$ cm³/m²·day·Pa) | 1.30 | 1.32 | 1.40 |
| Water vapor permeability (g/m²·day) | 56.2 | 64.8 | 85.4 |

The mole number of metal salt is the mole number of metal salt per carboxyl group in cellulose fiber Oxygen permeability was evaluated by the equal pressure method

Table B5 shows results of evaluation of Examples B22 and B23. Comparison between Examples B22 and B23 shows that better water vapor barrier properties were achieved when a solution of sodium chloride was sprayed on a wet film. The reason was assumed that a metal ion and an acid group ion penetrated easier into a wet film than into a dry film to form an inorganic metal salt more uniformly and fill spaces among cellulose fibers in the wet film.

Examples B24 to B26 and Comparative Example B4

In each of Examples B24 to B26, a suspension of cellulose fibers (content of carboxyl groups: 1.2 mmol/g, amount of oxidized pulp: 1.3% by mass) prepared as in Preparation Example B1 was applied on a side of a poly (ethylene terephthalate) (PET) sheet (trade name: Lumirror, Toray Industries Inc., sheet thickness: 7 μm) with a bar coater (#50).
Immediately after the sheet was coated, while a coating film was still wet, on the surface of the film was sprayed an aqueous solution of an organic metal salt such that a mole number of the organic metal salt to one mole of carboxyl group in cellulose fibers was as shown in Table B6.
Then, the sprayed film was dried for 360 minutes at 23°C to obtain a molded composite having a layer of a film containing specific cellulose fibers and the inorganic metal salt.
Each gas barrier layer (layer of a film formed on the surface of a substrate) of Examples B24 to B26 had a thickness of about 800 nm after dried. These were measured for oxygen permeability and water vapor permeability. Results are shown in Table B6. Oxygen permeability was measured by the equal pressure method.
In Comparative Example B4, a film of cellulose fibers was similarly formed on the surface of a substrate as in Example B24, except that an aqueous solution of an organic metal salt was not sprayed. Comparative Example B4 was prepared by only applying a suspension of cellulose fibers having a carboxyl group of a sodium-salt type, and did not contain an organic metal salt other than that of carboxyl groups in the film.

Table B6

| | Example | | | Comparative example |
|---|---|---|---|---|
| | B24 | B25 | B26 | B4 |
| Kind/thickness of substrate sheet ($\mu$m) | PET/25 | PET/25 | PET/25 | PET/25 |
| Thickness of gas barrier (nm) | 800 | 800 | 800 | 800 |
| Amount of carboxyl group of cellulose fiber(mmol/g) | 1.2 | 1.2 | 1.2 | 1.2 |
| Kind of metal salt (mole number of additiion) | Sodium acetate (12.4) | Magnesium acetate (13.8) | Sodium citrate (9.8) | - |
| Oxygen permeability(equal pressure method) ($10^{-5}$ $cm^3/m^2 \cdot day \cdot Pa$) | 12.9 | 7.1 | 1.3 | 28 |
| Water vapor permeability ($g/m^2 \cdot day$) | 20.6 | 20.5 | 19.5 | 24.5 |
| The mole number of a metal salt solution is the mole number of metal salt per carboxyl group in cellulose fiber Oxygen permeability was evaluated by the equal pressure method | | | | |

Table B6 shows results of evaluation of Examples B24 to B26. Examples B24 to B26 achieved higher oxygen barrier properties and water vapor barrier properties than that of Comparative Example B4. Therefore, it was shown that a molded composite having a layer of a film containing specific cellulose fibers and an organic metal salt had higher oxygen barrier properties and water vapor barrier properties than that of a molded composite without an organic metal salt.

**Claims**

1.  A suspension of cellulose fibers, comprising cellulose fibers, a polyvalent metal and a volatile base, wherein the cellulose fibers have an average fiber diameter of not more than 200 nm and the content of carboxyl groups of cellulose composing the cellulose fibers of 0.1 to 2 mmol/g.

2.  The suspension of cellulose fibers according to claim 1, wherein the amount of the volatile base is 1 to 500 equivalents to the content of carboxyl groups in the cellulose fibers.

3.  The suspension of cellulose fibers according to claim 1, wherein the amount of the polyvalent metal is 0.1 to 1.5 equivalents to the content of carboxyl groups in the cellulose fibers.

4.  A film formed from the suspension of cellulose fibers according to claim 1.

5.  A molded composite, comprising a substrate and a layer formed from the suspension of cellulose fibers according to claim 1 on the substrate.

6.  A method for producing a suspension of cellulose fibers, comprising steps of mixing cellulose fibers with an aqueous acid solution, wherein the cellulose fibers have an average fiber diameter of not more than 200 nm and the content of carboxyl groups of cellulose composing the cellulose fibers of 0.1 to 2 mmol/g;

filtering the mixture; and

mixing the filtered matter, obtained in the preceding step, with an aqueous solution comprising a polyvalent metal and a volatile base.

7. The method for producing a suspension of cellulose fibers according to claim 6, wherein the structure of the carboxyl group in the cellulose fibers is:

$COO^-Na^+$, before the step of mixing cellulose fibers with the aqueous acid solution;

$COOH$, in the step of mixing with the aqueous acid solution; and

$COO^-B^+$ ($B^+$ represents a conjugated acid of the volatile base), in the step of mixing with the aqueous solution comprising a polyvalent metal and a volatile base.

8. A method for producing the film according to claim 4, comprising steps of applying the suspension of cellulose fibers to a hard surface for forming; drying the suspension of cellulose fibers to produce a film; and heating it at 30 to 300°C for 1 to 300 minutes.

9. A method for producing the molded composite according to claim 5, comprising steps of applying the suspension of cellulose fibers to the surface of the substrate; drying the suspension of cellulose fibers to produce the molded composite; and heating it at 30 to 300°C for 1 to 300 minutes.

10. A film, comprising cellulose fibers and an inorganic metal salt or an organic metal salt, wherein the cellulose fibers have an average fiber diameter of not more than 200 nm and the content of carboxyl groups of cellulose composing the cellulose fibers of 0.1 to 2 mmol/g.

11. The film according to claim 10, wherein the cellulose fibers having an average fiber diameter of not more than 200 nm have an average aspect ratio of 10 to 1,000.

12. The film according to claim 10 or 11, wherein the inorganic metal salt is selected from the group consisting of inorganic sodium salts, inorganic magnesium salts and inorganic aluminum salts.

13. The film according to claim 10 or 11, wherein the organic metal salt is selected from the group consisting of sodium carboxylate or magnesium carboxylate.

14. A molded composite, comprising a molded substrate and a layer of the film according to any one of claims 10 to 13 on the surface of the molded substrate.

15. A method for producing the film according to any one of claims 10 to 13, comprising steps of:

applying the suspension of cellulose fibers on a base plate to form a film material;

attaching a solution of an inorganic metal salt to the film material; and

drying it.

16. A method for producing the molded composite according to claim 14, comprising steps of:

applying the suspension of cellulose fibers on the substrate to form a film material;

attaching a solution of an inorganic metal salt to the film material; and

drying it.

17. The method for producing the film according to claim 15, wherein the step of attaching a solution of an inorganic metal salt to the film material is performed without drying the film material.

18. The method for producing the molded composite according to claim 16, wherein the step of attaching a solution of an inorganic metal salt to the film material is performed without drying the film material.

EP 2 371 893 A1

## INTERNATIONAL SEARCH REPORT

International application No.

PCT/JP2009/071890

### A. CLASSIFICATION OF SUBJECT MATTER

*C08L1/02*(2006.01)i, *B32B5/02*(2006.01)i, *C08J7/04*(2006.01)i, *C08K3/10*
(2006.01)i, *C08K3/28*(2006.01)i, *C08K5/09*(2006.01)i, *C08K5/17*(2006.01)i,
*C09D5/00*(2006.01)i, *C09D101/00*(2006.01)i, *D21H11/16*(2006.01)i

According to International Patent Classification (IPC) or to both national classification and IPC

### B. FIELDS SEARCHED

Minimum documentation searched (classification system followed by classification symbols)
C08L1/02, B32B5/02, C08J7/04, C08K3/10, C08K3/28, C08K5/09, C08K5/17,
C09D5/00, C09D101/00, D21H11/16

Documentation searched other than minimum documentation to the extent that such documents are included in the fields searched
Jitsuyo Shinan Koho          1922–1996     Jitsuyo Shinan Toroku Koho     1996–2010
Kokai Jitsuyo Shinan Koho    1971–2010     Toroku Jitsuyo Shinan Koho     1994–2010

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-001728 A  (Asahi Kasei Corp.),<br>10 January 2008 (10.01.2008),<br>claims; examples<br>(Family: none) | 1-9 |
| A | WO 2007/088974 A1  (Kyushu University),<br>09 August 2007 (09.08.2007),<br>claims; entire text<br>(Family: none) | 1-9 |
| A | JP 2008-242154 A  (Kyoto University),<br>09 October 2008 (09.10.2008),<br>claims; entire text<br>& EP 2130672 A          & WO 2008/117848 A1 | 1-9 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>09 April, 2010 (09.04.10) | Date of mailing of the international search report<br>27 April, 2010 (27.04.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2009/071890

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-060680 A (Kyoto University),<br>10 March 2005 (10.03.2005),<br>claims; entire text<br>& US 2006/0182941 A1 & US 2009/0123726 A<br>& EP 1650253 A1 & WO 2005/012404 A1<br>& KR 10-2006-0052961 A & CN 1832985 A | 1-9 |
| A | JP 2000-503703 A (Rhodia Chimie),<br>28 March 2000 (28.03.2000),<br>claims; entire text<br>& US 2001/0011516 A1 & US 6231657 B1<br>& US 6348436 B1 & EP 912633 A<br>& EP 912653 A & WO 1998/002486 A1<br>& WO 1998/002499 A1 & DE 69704360 T<br>& DE 69704360 D & DE 69708294 D<br>& DE 69708294 T & FR 2750994 A<br>& FR 2753995 A & FR 2750994 A1<br>& AT 199924 T | 1-9 |
| E,A | JP 2010-037348 A (Dai-Ichi Kogyo Seiyaku Co.,<br>Ltd.),<br>18 February 2010 (18.02.2010),<br>claims; entire text<br>(Family: none) | 1-9 |
| P,A | JP 2009-041117 A (Nisshinbo Industries, Inc.),<br>26 February 2009 (26.02.2009),<br>claims; entire text<br>(Family: none) | 1-9 |

Form PCT/ISA/210 (continuation of second sheet) (July 2009)

**INTERNATIONAL SEARCH REPORT**

| International application No. |
| --- |
| PCT/JP2009/071890 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
      See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
      1-9

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2009/071890 |

Continuation of Box No.III of continuation of first sheet(2)

A common technical matter between the invention according to claim
1 and the invention according to claim 10 is a matter that they relate
to cellulose fibers each of which "has an average fiber diameter of 200
nm or less, ··· and in which a cellulose constituting the cellulose fibers
has a carboxyl group content of 0.1 to 2 mmol/g".
However, the matter is a known matter, as disclosed in, for example,
a document shown below, and therefore cannot be regarded as "a special
technical feature".

JP 2008-001728 A (Asahi Kasei Corp.) 10 January 2008 (10.01.2008),
claims and examples (family: none)

Therefore, there is no technical relationship involving one or more
of the same or corresponding special technical features between the
invention according to claim 1 and the invention according to claim 10,
and these inventions cannot be regarded as being so linked to each other
as to form a single general inventive concept.

It is considered that the inventions according to claims 1-18 include
the following two groups of inventions in each of which the inventions
are linked to one another via a special technical feature.

(Invention 1) Inventions according to claims 1-9.
(Invention 2) Inventions according to claims 10-18.

The international search report was prepared on the above-stated
(Invention 1).

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002348522 A
- JP 2008001728 A
- JP 2005126539 A
- WO 2007125741 A
- JP 2001334600 A
- JP 10237180 A

**Non-patent literature cited in the description**

- Bio MACROMOLECULES. American Chemical Society, June 2006, vol. 7
- **M. DOI ; D. F. EDWARDS.** The Theory of Polymer Dynamics. CLARENDON PRESS, 1986, 312